# EUROPÄISCHE PATENTSCHRIFT

(11) **EP 2 036 322 B1**
(45) Veröffentlichungstag und Bekanntmachung des Hinweises auf die Patenterteilung: **08.08.2018**
(21) Anmeldenummer: 07765515.7
(22) Anmeldetag: 20.06.2007
(51) Int. Cl.: H04M 7/00, H04N 5/00

(54) **VORRICHTUNG UND VERFAHREN ZUR UNTERSTÜTZUNG VON IP-TELEPHONIE IN EINER UNTERHALTUNGSELEKTRONIK-UMGEBUNG**
DEVICE AND METHOD FOR THE SUPPORT OF IP TELEPHONY IN A CONSUMER ELECTRONICS ENVIRONMENT
PROCEDE ET DISPOSITIF POUR ASSISTER LA TELEPHONIE INTERNET DANS UN ENVIRONNEMENT D'ELECTRONIQUE DE DIVERTISSEMENT

(30) Priorität: 21.06.2006 DE 102006028502
(43) Veröffentlichungstag der Anmeldung: 18.03.2009
(73) Patentinhaber: Nokia Solutions and Networks GmbH & Co. KG, 81541 Munich (DE)
(72) Erfinder: GOLDMANN, Reiner, 82239 Alling (DE); LÖBIG, Norbert, 64291 Darmstadt (DE)
(74) Vertreter: Weidel, Gottfried
(86) Internationale Anmeldenummer: PCT/EP2007/056142
(87) Internationale Veröffentlichungsnummer: WO 2007/147849

(56) Entgegenhaltungen:
- US-A1- 2005 281 417
- AGAM SHAW: PCWORLD, 11. Mai 2004 (2004-05-11), XP007903244
- WINDOWSFORDEVICES, 11. Mai 2004 (2004-05-11), XP007903243

## Beschreibung

Die vorliegende Erfindung bezieht sich auf eine Vorrichtung und ein Verfahren zur Unterstützung von IP-Telephonie in einer Unterhaltungselektronik-Umgebung und insbesondere auf ein Gerät und ein Verfahren zur Telefonie-Unterstützung für eine so genannte Set-Top-Box.

Insbesondere zum Empfang von digitalen TV-Signalen werden heutzutage Empfangseinheiten verwendet, die auch als so genannte "Set-Top-Boxen" bezeichnet werden. Allgemein bezeichnen derartige "Set-Top-Boxen" periphere Geräte, die eine Verbindung zu einem Unterhaltungselektronik-Ausgabegerät wie zum Beispiel einem Fernsehgerät (TV) herstellen und eine Vielzahl von unterschiedlichen Nutzdatenquellen wie beispielsweise Broadcast, Video on Demand (VoD) und sogenannte "Walled Garden" Inhalte aus dem Internet beziehen können.

Auf diese Weise erhält beispielsweise ein Fernsehzuschauer über ein gleiches Übertragungsmedium, welches im Rahmen der Konvergenz der Netze auch Telefonie ermöglicht, Zugriff auf Broadcast-TV, Video on Demand und Internet. Die Unterstützung von Video-Telefonie über IP und insbesondere von IP-Telephonie in einer derartigen Unterhaltungselektronik-Umgebung wird daher zunehmend gefordert.

Aus der Literaturstelle "Agam Shaw: PCWorld, 11. Mai 2004 (2004-05-11), XP007903244" ist eine Set-Top-Box mit integrierter Telephonie-Funktionalität offenbart, wobei die unterschiedlichen Funktionalitäten einer Set-Top-Box und eines IP-Telephons in einem Gerät miteinander verschmolzen sind.

Aus der weiteren Literaturstelle "WindowsForDevices.com, 11. Mai 2004, (2004-05-11), XP007903243" ist ein weiteres Multifunktionsgerät bekannt, wobei die Funktionalitäten einer Set-Top-Box, eines PCs, eines Audiogerätes, eines Speichermediums eines Gateways und eines VoIP-Telephons in einem einzigen Gerät realisiert sind.

Aus der Druckschrift US 2005/0281417 A1 ist ein weiteres herkömmliches Multimedia-Gerät bekannt, wobei eine satellitengestützte Heimkino-Umgebung mit einer VoIP-Telephonie derart verbunden werden kann, dass bei einem eingehenden Ruf eine Lautstärke des Heimkinos verringert wird.

Ein herkömmliches Gerät zur Unterstützung von Video-Telefonie in einer Unterhaltungselektronik-Umgebung ist beispielsweise die von Siemens hergestellte Set-Top-Box "Speedstream 8700". Hierbei werden in einem Gerät sowohl die Merkmale einer herkömmlichen Set-Top-Box mit den Merkmalen eines IP-Telephonieendgeräts kombiniert, wodurch nunmehr auch Video/Audio-Telefonie-Features über eine Set-Top-Box ermöglicht werden. Auf Grund der Full-custom-Realisierung besitzt eine derartige Video-Telefonie-taugliche Set-Top-Box jedoch eine erhöhte Komplexität, die sich sowohl in den Herstellungskosten als auch in den äußeren Abmessungen negativ niederschlagen. Darüber hinaus wird für dieses herkömmliche Gerät nicht nur ein herkömmliches paketvermittelndes Netzwerk wie beispielsweise das Internet, sondern auch ein leitungsvermittelndes Netzwerk wie beispielsweise das herkömmliche Festnetz (PSTN, Public Switched Telephone Network) benötigt. Insbesondere ist jedoch zu alternativen Set-Top-Boxen von Konkurrenzherstellern keine Kompatibilität gegeben.

Alternativ sind Video-Telefonie-Erweiterungen für Unterhaltungselektronik-Umgebungen bekannt, wobei eine Erweiterungseinheit für Sprache zum Anschließen von herkömmlichen Telefonen bzw. Telekommunikationsendgeräten und einer kabelfähigen Set-Top-Box geschaltet werden kann.

Der Erfindung liegt demgegenüber die Aufgabe zu Grunde, eine Vorrichtung und ein Verfahren zur Unterstützung von IP-Telephonie in einer Unterhaltungselektronik-Umgebung zu schaffen, welche benutzerkomfortable Telephonie-Anwendungen und eine erhöhte Interoperabilität zu bereits existierenden Geräten in der Unterhaltungselektronik-Umgebung kostengünstig ermöglicht.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 15 gelöst.

Insbesondere kann die Signalverarbeitungseinheit eine Echokompensation durchführen, wobei Signalkomponenten im lokalen Audio und/oder Bild-Eingangssignal, die mit dem Unterhaltungselektronik-Eingangssignal korreliert sind, vollständig oder teilweise ausgelöscht werden, wodurch auf kostengünstige Art und Weise einem fernen Gesprächsteilnehmer z.B. die Wahrnehmbarkeit des Tatbestandes der Verfolgung eines Fernsehprogramms bei gleichzeitiger Telephonie verborgen werden kann.

Ferner kann eine Eingabe-Schnittstelle zum Senden/Empfangen von Eingabe-Steuerdaten von/zu einer Eingabeeinheit vorgesehen sein, wobei die Eingabe-Steuerdaten von/zur Steuereinheit übermittelt werden. Auf diese Weise kann beispielsweise über eine Fernbedienung eine zusätzliche Benutzersteuerung der Telefonie-Erweiterung ermöglicht werden.

Es ist insbesondere eine Weiterbildung, dass die Steuereinheit Eingabe-Steuerdaten von/zu einer Eingabeeinheit überträgt.

Beispielsweise kann in der Signalverarbeitungseinheit eine Signal-Auswahl durchgeführt werden, wobei aus dem Telekommunikations-Eingangssignal oder dem Unterhaltungselektronik-Eingangssignal ein Signal als Unterhaltungselektronik-Ausgangssignal ausgewählt wird. Ferner kann zwischen dem Audio- oder Bild-Eingangssignal oder dem Unterhaltungselektronik-Eingangssignal als Telekommunikations-Ausgangssignal ausgewählt werden.

Alternativ oder zusätzlich kann auch eine Signal-Mischung durch die Signalverarbeitungseinheit durchgeführt werden, wodurch beispielsweise Anwendungen wie "Bild im Bild" (Picture in Picture, PiP) oder Mischen der Tonsignale ermöglicht werden.

Ferner kann eine Signalformat-Umwandlung in der Signalverarbeitungseinheit der vorstehend genannten Signale durchgeführt werden, sofern sie unterschiedliche Signalformate aufweisen, wodurch man eine geschickte Ausnutzung der im Gesamtsystem vorhandenen Ressourcen erhält. Die Realisierung von Anrufbeantwortern und dergleichen unter Zuhilfenahme von in der Unterhaltungselektronik-Umgebung vorhandenen Aufzeichnungsgeräten mit unterschiedlichen Signalformaten wird dadurch ermöglicht.

Es ist eine weitere Weiterbildung, dass eine Funktion der Signal-Verarbeitungseinheit durch über die Eingabeeinheit eingegebene Eingabe-Steuerdaten angesteuert wird.

Die Empfangseinheit-Steuereinheit kann beispielsweise eine Eingangssignal-Auswahl der Unterhaltungselektronik-Empfangseinheit steuern, wodurch sich eine erhöhte Anpassungsfähigkeit des Gesamtsystems ergibt. Insbesondere kann eine Empfangs-Funktionalität der Unterhaltungselektronik-Empfangseinheit gesteuert werden, wodurch bei Bandbreitenengpässen beispielsweise zu Gunsten der Telefonie-Anwendung zum Beispiel eine TV-Anwendung abgeschaltet oder beschränkt wird.

Ferner kann die Empfangseinheit-Steuereinheit eine Aufzeichnungs-Funktionalität einer jeweiligen Unterhaltungselektronik-Empfangseinheit steuern, wodurch insbesondere in Verbindung mit der vorstehend beschriebenen Signalformat-Umwandlung multimediale Anrufbeantworter-Funktionalitäten sehr einfach unter Ausnutzung von bereits existierenden Ressourcen realisiert werden können.

Es ist insbesondere eine Weiterbildung, dass die Empfangseinheit-Steuereinheit eine Aufzeichnungs- und/oder Wiedergabe-Funktionalität der Unterhaltungselektronik-Empfangseinheit steuert.

Es ist eine weitere Weiterbildung, dass die Steuerung der Aufzeichnungs- und/oder Wiedergabe-Funktionalität in Abhängigkeit von Kriterien erfolgt.

Es ist eine weitere Weiterbildung, dass das Kriterium für die Steuerung der Aufzeichnungs-Funktionalität eine Benutzereingabe über die Eingabeeinheit oder die Annahme eines Rufs über den IP-Telephonie Client ist.

Es ist eine weitere Weiterbildung, dass das Kriterium für die Steuerung der Wiedergabe-Funktionalität eine Benutzereingabe über die Eingabeeinheit ist.

Vorzugsweise wird die Unterhaltungselektronik-Empfangseinheit über die für die Telekommunikation genutzte Schnittstelle von der Empfangseinheit-Steuereinheit gesteuert. Grundsätzlich können jedoch auch eigens dafür vorgesehene Steuerschnittstellen vorgesehen werden, über die eine unmittelbare Steuerung der Unterhaltungselektronik-Empfangseinheiten ermöglicht ist.

Es ist insbesondere eine Weiterbildung, dass die Empfangseinheit-Steuereinheit automatisch und/oder in Abhängigkeit von einer Benutzereingabe mittels der Steuereinheit steuerbar ist.

In den Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Figur 1 eine vereinfachte Blockdarstellung einer Vorrichtung zur Unterstützung von IP-Telephonie;
Figur 2 eine vereinfachte Darstellung einer Unterhaltungselektronik-Umgebung mit erfindungsgemäßer IP-Telephonie-Erweiterung;
Figuren 3A bis 3C eine vereinfachte Darstellung zur Veranschaulichung einer Unterhaltungselektronik-Umgebung mit IP-Telephonie-Erweiterung gemäß einem ersten Ausführungsbeispiel;
Figur 4 eine vereinfachte Blockdarstellung zur Veranschaulichung einer Unterhaltungselektronik-Umgebung mit IP-Telephonie-Erweiterung gemäß einem zweiten Ausführungsbeispiel;
Figur 5 eine vereinfachte Blockdarstellung zur Veranschaulichung einer Unterhaltungselektronik-Umgebung mit IP-Telephonie-Erweiterung gemäß einem dritten Ausführungsbeispiel;
Figuren 6A bis 6C eine vereinfachte Blockdarstellung zur Veranschaulichung einer Unterhaltungselektronik-Umgebung mit IP-Telephonie-Erweiterung gemäß einem vierten Ausführungsbeispiel;
Figuren 7A und 7B eine vereinfachte Blockdarstellung zur Veranschaulichung einer Unterhaltungselektronik-Umgebung mit IP-Telephonie-Erweiterung gemäß einem fünften Ausführungsbeispiel; und
Figur 8 ein vereinfachtes Flussdiagramm zur Veranschaulichung wesentlicher Verfahrensschritte bei der Realisierung einer IP-Telephonie-Erweiterung in einer Unterhaltungselektronik-Umgebung.

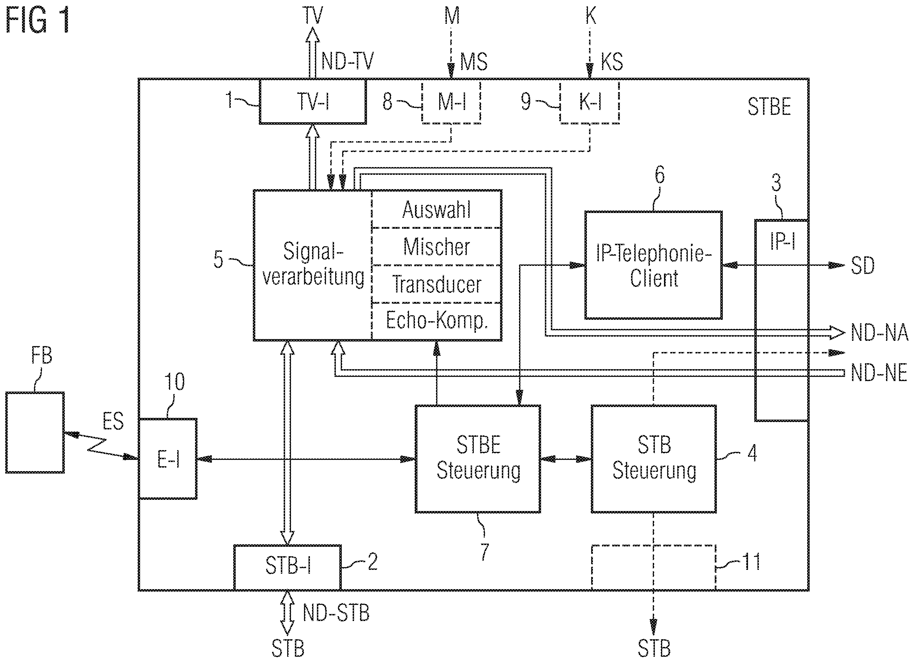

Figur 1 zeigt eine vereinfachte Blockdarstellung der erfindungsgemäßen Vorrichtung zur Unterstützung von IP-Telephonie, wie sie in einer Unterhaltungselektronik-Umgebung umgesetzt werden kann.

Die Erfindung wird hierbei beispielhaft anhand einer Set-Top-Box-Erweiterung (Set Top Box Extension) STBE beschrieben, wie sie in einer Unterhaltungselektronik-Umgebung zur Telefonie-Erweiterung einer bereits existierenden Set-Top-Box STB verwendet werden kann.

Gemäß Figur 1 weist die Set-Top-Box-Erweiterung STBE eine Ausgangssignal-Schnittstelle 1 zum Senden eines Unterhaltungselektronik-Ausgangssignals ND-TV (TV Nutzdaten) an eine Unterhaltungselektronik-Ausgabeeinheit TV auf. Demzufolge kann die Unterhaltungselektronik-Ausgabeeinheit TV ein herkömmlicher Fernsehapparat sein, dem über die Ausgangssignal-Schnittstelle 1 ein entsprechendes Nutzdaten-Ausgangssignal ND-TV zur Anzeige ausgegeben wird. Die Set-Top-Box-Erweiterung STBE weist ferner eine Eingangssignal-Schnittstelle 2 auf, an der ein Unterhaltungselektronik-Eingangssignal ND-STB (als Nutzdaten-Eingangssignal) von einer Unterhaltungselektronik-Empfangseinheit STB empfangen wird. Die Empfangseinheit kann beispielsweise eine herkömmliche Set-Top-Box STB darstellen ist jedoch nicht darauf beschränkt.

Obwohl die Eingangssignal-Schnittstelle 2 üblicherweise nur zum Empfangen eines Unterhaltungselektronik-Eingangssignals konzipiert ist, kann sie grundsätzlich auch bidirektional ausgelegt sein, wobei über diese Schnittstelle auch Signale an die Unterhaltungselektronik-Empfangseinheit gesendet werden können. Herkömmliche allein für den Empfang ausgelegte Empfangseinheiten STB besitzen jedoch bisher keine derartige bidirektionale Schnittstelle.

Ferner weist die Set-Top-Box-Erweiterung STBE eine Telekommunikationsschnittstelle 3 zum Senden/Empfangen von Telekommunikations-Aus-/Eingangssignalen auf, wobei zwischen Signalisierungsdaten SD, Nutzdaten-Ausgangssignal ND-NA und Nutzdaten-Eingangssignal ND-NE unterschieden wird. Die Telekommunikationsschnittstelle 3 stellt vorzugsweise ein sogenanntes IP-Interface (IP-I) dar, wodurch eine Anbindung an ein paketvermittelndes Netzwerk N ermöglicht werden kann.

Zur Realisierung der eigentlichen Telefonie-Erweiterung besitzt die Set-Top-Box-Erweiterung STBE ferner einen sogenannten IP-Telephonie-Client 6, der unter Zuhilfenahme der Signalisierungsdaten SD der Telekommunikationsschnittstelle 3 über das paketvermittelnde Netz N eine Sprachverbindung, aber auch eine Bild- bzw. Video-Verbindung ermöglicht.

Ferner ist in der Set-Top-Box-Erweiterung STBE eine Signal-verarbeitungseinheit 5 vorgesehen, die das empfangene Unterhaltungselektronik-Eingangssignal ND-STB und/oder das Telekommunikations-Eingangssignal ND-NE empfängt und auf verschiedenste Art und Weise verarbeiten kann. Hierbei kann ein Unterhaltungselektronik-Ausgangssignal ND-TV, das über die Schnittstelle 1 ausgegeben wird, und/oder ein Telekommunikations-Ausgangssignal ND-NA, das über die Schnittstelle 3 ausgegeben wird, erzeugt werden. Auf diese Weise können die Eingangssignale auf unterschiedlichste Art und Weise verarbeitet und als unterschiedliche Ausgangssignale ausgegeben werden.

Ferner weist die Set-Top-Box-Erweiterung STBE eine Empfangseinheit-Steuereinheit 4 auf, mit der die Unterhaltungselektronik-Empfangseinheit STB, d.h. beispielsweise die herkömmliche Set-Top-Box angesteuert werden kann. Die Ansteuerung kann hierbei über eine optionale zusätzliche Steuerschnittstelle 11 erfolgen oder über die zur Telekommunikation genutzte Schnittstelle 3, wobei die Empfangseinheit STB ebenfalls über eine geeignete Schnittstelle verfügen und über ein Netzwerk mit der Erweiterung STBE in Verbindung stehen muss. Die Signalverarbeitungseinheit 5, der IP-Telephonie-Client 6 und die Empfangseinheit-Steuereinheit 4 werden von einer Steuereinheit 7, wie beispielsweise einem Prozessor, zentral gesteuert.

Zur Realisierung einer benutzerabhängigen Steuerung kann ferner eine Eingabe-Schnittstelle 10 zum Senden/Empfangen von Eingabe-Steuerdaten ES von/zu einer Eingabeeinheit FB vorgesehen sein, wobei die Eingabe-Steuerdaten ES von/zur Steuereinheit 7 übermittelt werden. Vorzugsweise wird als Eingabeeinheit FB eine Fernbedienung zum Einsatz kommen.

Ferner kann die Set-Top-Box-Erweiterung STBE eine Audiodaten-Schnittstelle 8 zum Empfangen von einem Audio-Eingangssignal MS von einer Audio-Aufnahmeeinheit M, wie beispielsweise einem Mikrofon, und eine Bilddaten-Schnittstelle 9 zum Empfangen von einem Bild-Eingangssignal KS von einer Bild-Aufnahmeeinheit K, wie beispielsweise einer Kamera, empfangen, wobei das Audio-Eingangssignal MS und das Bild-Eingangssignal KS ebenfalls der Signalverarbeitungseinheit 5 als Eingangssignale zugeführt werden können. Vorzugsweise ist das Mikrofon M außerhalb des über die Kamera K sichtbaren Bildausschnittes angeordnet. Optional kann das Mikrofon M in der Fernbedienung FB integriert sein. Die Bild-Aufnahmeeinheit K kann vorzugsweise an der Ausgabeeinheit bzw. dem Fernsehgerät TV angeordnet oder integriert sein.

Die Signalverarbeitungseinheit 5 weist nun eine Vielzahl von Grund-Funktionalitäten auf, die von der Steuereinheit 7 angesteuert werden können. Einerseits kann die Signalverarbeitungseinheit 5 eine Signal-Auswahl durchführen, wodurch entweder das Telekommunikations-Eingangssignal ND-NE oder das Unterhaltungselektronik-Eingangssignal ND-STB als Unterhaltungselektronik-Ausgangssignal ND-TV an die Ausgabeeinheit bzw. das Fernsehgerät TV ausgegeben wird. Ferner kann bei Existenz der Audio- und/oder Bild-Eingangssignale bzw. der entsprechenden Schnittstellen 8 und 9 auch eine Signal-Auswahl von einer Signalverarbeitungseinheit 5 dahingehend realisiert werden, dass entweder das Audio- und/oder Bild-Eingangssignal MS und/oder KS oder das Unterhaltungselektronik-Eingangssignal ND-STB als Telekommunikations-Ausgangssignal ND-NA an das Telekommunikationsnetzwerk ausgegeben wird.

Neben dieser relativ einfachen Signalauswahl bzw. Signal-Umschaltung kann die Signalverarbeitungseinheit 5 ferner einen Signal-Mischer zur Realisierung einer Signal-Mischung aufweisen. Hierbei kann entweder das Telekommunikations-Eingangssignal ND-NE mit dem Unterhaltungselektronik-Eingangssignal ND-STB gemischt werden und entweder als Unterhaltungselektronik-Ausgangssignal ND-TV oder als Telekommunikations-Ausgangssignal ND-NA ausgegeben werden. Insbesondere können auch die Audio- und/oder Bild-Eingangssignale MS und/ oder KS mit dem Unterhaltungselektronik-Eingangssignal ND-STB gemischt und als Telekommunikations-Ausgangssignal ND-NA an das Telekommunikationsnetzwerk N oder als Unterhaltungselektronik-Ausgangssignal ND-TV an die Ausgabeeinheit bzw. den Fernsehapparat TV ausgegeben werden. Auf diese Weise sind die unterschiedlichsten Signalaufbereitungen möglich, so dass beispielsweise am Fernsehgerät TV mittels "Picture-in-Picture"-Technik sowohl das von der Empfangseinheit STB eingehende Eingangssignal ND-STB als auch das Bild der lokalen Video-Kamera und/oder das Bild des fernen Video-Telephonie-Teilnehmers gleichzeitig lokal ausgegeben und angezeigt werden kann.

Vorzugsweise weist die Signalverarbeitung eine Signalformat-Umwandlungseinheit bzw. einen "Transducer" zur Realisierung einer Signalformat-Umwandlung auf, wobei insbesondere eine Signalformat-Umwandlung der üblichen Kodierung von Unterhaltungselektronik-Signalen in die übliche Kodierung von Telekommunikations-Signalen durchgeführt wird (z.B. MPEG4 --> H.263). Diese Umwandlung steht selbstverständlich auch in umgekehrter Richtung von der üblichen Kodierung der Telekommunikations-Signale zur üblichen Kodierung der Unterhaltungselektronik-Signale zur Verfügung. Ferner kann diese Signal-format-Umwandlung ebenfalls das Signalformat des Audio- und/oder Bild-Eingangssignals MS und KS in ein übliches Signalformat für Telekommunikations-Signale und/oder ein übliches Signalformat für Unterhaltungselektronik-Signale durchführen. Auf Grund dieser Signalformat-Umwandlung kann eine Anpassung der Set-Top-Box-Erweiterung STBE an beliebige Unterhaltungselektronik-Umgebungen durchgeführt werden.

Ferner kann die Signalverarbeitung eine Echokompensation durchführen, wobei vorzugsweise Signalkomponenten im Audio- und/oder Bild-Eingangssignal MS und/oder KS, die mit dem Unterhaltungselektronik-Eingangssignal ND-STB korreliert sind, vollständig oder zumindest teilweise ausgelöscht werden. Störende Rückkopplungseffekte bei gleichzeitiger Realisierung einer Telefonie und einer Ausgabe am Fernsehapparat TV können dadurch wirkungsvoll verhindert werden. Ebenfalls kann die Wahrnehmbarkeit des Tatbestandes der Verfolgung eines Fernsehprogramms bei gleichzeitiger Telephonie dem fernen Gesprächsteilnehmer hierdurch verborgen werden.

Die Empfangseinheit-Steuereinheit 4 kann beispielsweise die Unterhaltungselektronik-Empfangseinheit bzw. Set-Top-Box STB hinsichtlich ihrer Eingangssignal-Auswahl ansteuern. In Verbindung mit der Eingabeeinheit bzw. Fernbedienung FB kann dadurch eine Benutzersteuerung über die Set-Top-Box-Erweiterung STBE vereinfacht werden, da eine Auswahl von zum Beispiel zur Verfügung stehenden Empfangsprogrammen über ein einziges Gerät erfolgen kann. Die Empfangseinheit-Steuereinheit 4 kann in diesem Fall auch die Empfangs-Funktionalität der Unterhaltungselektronik-Empfangseinheit bzw. der Set-Top-Box STB grundsätzlich steuern und beispielsweise einen Empfang eines Senders über das Netzwerk freigeben (START TV) oder beenden (STOP TV). Auf diese Weise können wiederum benutzergesteuert oder automatisch Bandbreitenprobleme bei Eingang eines z.B. Video-Anrufs über das Netzwerk N komfortabel gelöst werden.

Schließlich kann die Empfangseinheit-Steuereinheit 4 auch eine Aufzeichnungs-Funktionalität der Unterhaltungselektronik-Empfangseinheit bzw. der Set-Top-Box STB steuern. Wenn beispielsweise die anzusteuernde Set-Top-Box STB ein Aufzeichnungsgerät beinhaltet, so kann die Empfangseinheit-Steuereinheit 4 auch die in der Set-Top-Box STB integrierte Aufzeichnungseinheit fernsteuern, um beispielsweise eine Aufzeichnung (Record) oder eine Wiedergabe (Play) von jeweiligen Signalen zu verursachen.

Die Ansteuerung der Unterhaltungselektronik-Empfangseinheit bzw. der Set-Top-Box STB erfolgt vorzugsweise über die Telekommunikationsschnittstelle 3 über das paketvermittelnde Netzwerk N oder ein Heim-Netzwerk mittelbar. Grundsätzlich kann jedoch auch eine unmittelbare Ansteuerung der Set-Top-Box STB durch die Empfangseinheit-Steuereinheit 4 über eine speziell ausgebildete Steuerschnittstelle 11 durchgeführt werden, wie beispielsweise eine Infrarot-Schnittstelle (IR). Die Ansteuerung der Signalverarbeitungseinheit 5 sowie der Empfangs-Steuereinheit 4 kann hierbei sowohl automatisch in Abhängigkeit von jeweils vorliegenden oder nicht vorliegenden Eingangssignalen und/oder in Abhängigkeit von einer Benutzereingabe mittels der Steuereinheit 7 durchgeführt werden.

Auf diese Weise erhält man eine IP-Telephonie-Erweiterung, die mit beliebigen Empfangsgeräten in einer Unterhaltungselektronik-Umgebung zusammen arbeiten kann. Ferner besteht auch die Möglichkeit zur Realisierung einer sog. "Standalone"-Lösung, falls z.B. nur Video-Telephonie über IP gefordert ist.

Ferner ist eine abhängige Fernbedienbarkeit der in der Unterhaltungselektronik-Umgebung vorhandenen Set-Top-Boxen über z.B. eine Ethernet-Schnittstelle oder ein vorhandenes Home Gateway möglich. Als Protokoll könnte hierbei beispielsweise HTTP verwendet werden. Unter Abstützung auf die Ressourcen der Unterhaltungselektronik-Umgebung sind ferner übergreifende Telefon-Features möglich. Eine Video-Mail Unterstützung ist somit ohne weitere Zusatzgeräte möglich.

Ferner kann ein störungsfreies, ggf. für den fernen Teilnehmer nicht wahrnehmbares gleichzeitiges Video-Telefonieren und Fernsehen (BTV, VoD, Internet) ermöglicht werden.

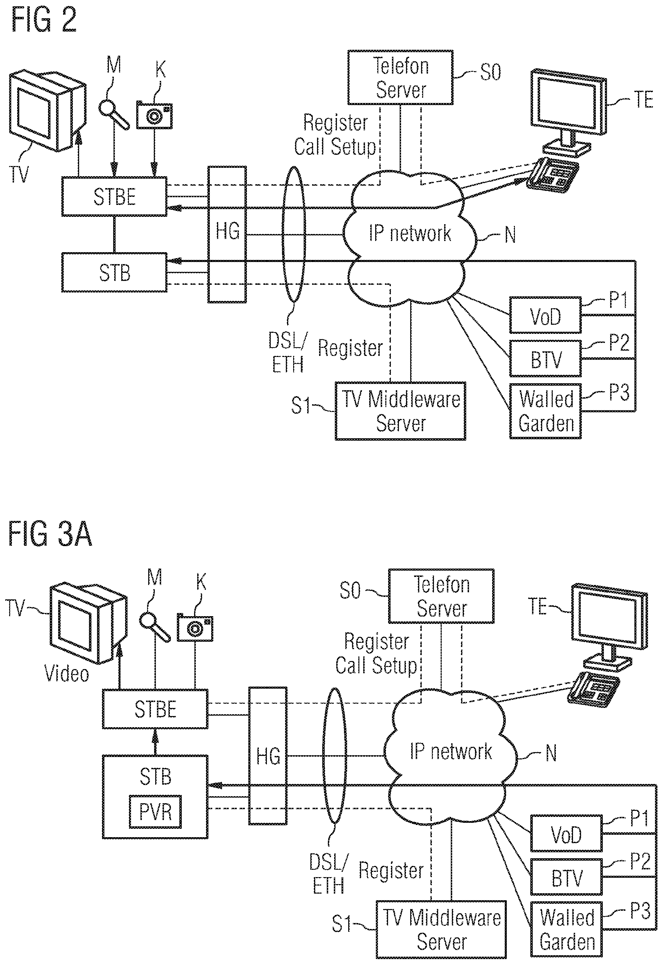

Zur Veranschaulichung der vorliegenden Erfindung zeigt Figur 2 eine vereinfachte Darstellung einer Unterhaltungselektronik-Umgebung, in der die erfindungsgemäße Set-Top-Box-Erweiterung STBE gemäß Figur 1 verwendet werden kann.

Gemäß Figur 2 wird die erfindungsgemäße prozessorgesteuerte Set-Top-Box-Erweiterung STBE in einer Unterhaltungselektronik-Umgebung mit einem Home-Network bzw. Heimnetzwerk betrieben, um die Funktion einer Video/Telefonie-Erweiterung zu realisieren. Demzufolge kann die Ausgabe des Video- und Audio-signals eines fernen Teilnehmers bzw. Telekommunikationsendgerätes TE beispielsweise auf der Unterhaltungselektronik-Ausgabeeinheit bzw. dem Fernsehgerät TV erfolgen. Die Eingabe eines lokalen Video- und Audio-Signals erfolgt über einen Kameraeingang einer Kamera K und einen Mikrofoneingang eines Mikrofons M. Die Audiodaten- und Bilddaten-Schnittstellen 8 und 9 können zeitgemäß und vorteilhaft gemäß USB-Standard (Universal Serial Bus) ausgebildet sein. Sowohl die Set-Top-Box-Erweiterung STBE als auch eine bereits vorhandene Set-Top-Box STB sind über eine Telekommunikationsschnittstelle an das Home-Network bzw. an ein Home-Gateway HG angeschlossen, das über eine weitere Schnittstelle, zum Beispiel DSL oder Ethernet ETH, an ein paketvermittelndes Netzwerk N, welches vorzugsweise das Internet darstellt, angebunden ist.

Gemäß Figur 2 hat der Teilnehmer beispielsweise über einen TV Middleware Server S1 verschiedene Dienste subskribiert (Register), so dass über das paketvermittelnde Netzwerk N beispielsweise Video on Demand (VoD) vom Dienstanbieter P1, Broadcast-TV (BTV) vom Dienstanbieter P2 oder so genanntes "Walled Garden" vom Dienstanbieter P3 zur Verfügung steht. Die Verbindungsschnittstelle zwischen der Set-Top-Box-Erweiterung STBE und der Set-Top-Box STB kann zur Übertragung sowohl eines analogen als auch eines digitalen Datenstroms ausgelegt sein. Insbesondere kann auch ein bidirektionaler Datenstrom darüber realisiert werden.

Vorzugsweise besitzt die Set-Top-Box-Erweiterung STBE eine Fernbedienung FB, über die die zum Telefonieren notwendigen Bedienereingaben möglich sind. Insbesondere sind dies die Eingabe einer Rufnummer oder die Entgegennahme eines eintreffenden Anrufs sowie die Freischaltung von Audio- und/oder Video-Datensignalen zu Beginn eines Gesprächs sowie im laufenden Gespräch. Die Ereignisse und Bedienaktionen mit Telefonie-Relevanz können beispielsweise durch geeignete "Pop-up"-Fenster und Menüs am Bildschirm der Ausgabeeinheit bzw. des Fernsehgeräts TV unterstützt werden. Optional kann das Mikrofon M in die Fernbedienung FB der Set-Top-Box-Erweiterung STBE integriert sein.

Ferner kann optional auch in der herkömmlichen Set-Top-Box STB eine nicht dargestellte personalisierte Aufzeichnungseinheit (PVR, Personalized Video Recorder) vorhanden sein. Diese kann dann über die zusätzliche Schnittstelle 11, über die Schnittstelle 2 (sofern bidirektional) oder über die Schnittstelle 3 und das Home-Network bzw. Home-Gateway HG durch die Set-Top-Box-Erweiterung STBE angesteuert werden. Grundsätzlich könnte eine derartige Aufzeichnungseinheit auch innerhalb der Set-Top-Box-Erweiterung STBE realisiert werden, wodurch jedoch der Vorteil eines Zugriffs auf ohnehin vorhandene Ressourcen in der Unterhaltungselektronik-Umgebung verloren geht.

Die IP-Telephonie-Verbindung wird vorzugsweise mittels eines Telefon Servers SO ermöglicht, bei dem sich der Teilnehmer ebenfalls registrieren muss (Register Call Setup). Nach einer derartigen Registrierung ist eine IP-Telephonie-Verbindung sowohl zu einem so genannten IP-basierten Telekommunikationsendgerät TE als auch zu einem nicht dargestellten herkömmlichen Telefon oder Videotelefon in einem (nicht dargestellten) leitungsvermittelnden Netzwerk möglich, wobei hierfür jedoch weitere Gateways zur Anbindung des leitungsvermittelnden Netzes an das paketvermittelnde Netz N vorgesehen sein müssen.

Nachfolgend werden bevorzugte Ausführungsbeispiele, die mittels der erfindungsgemäßen Set-Top-Box-Erweiterung STBE realisierbar sind, im Einzelnen beschrieben, wobei gleiche Bezugszeichen gleiche oder entsprechende Elemente wie in Figuren 1 und 2 bezeichnen, weshalb auf eine wiederholte Beschreibung nachfolgend verzichtet wird.

Die Figuren 3A bis 3C zeigen eine vereinfachte Anordnung zur Veranschaulichung einer IP-Telephonie-Erweiterung in einer Unterhaltungselektronik-Umgebung gemäß einem ersten Ausführungsbeispiel, wobei ein "Time-shift-TV" über eine Aufzeichnungseinheit bei Entgegennahme eines Telefonanrufs dargestellt ist. Gemäß Figuren 3A bis 3C weist die Unterhaltungselektronik-Empfangseinheit bzw. Set-Top-Box STB eine lokale Aufzeichnungseinheit PVR (Personalized Video Recorder) auf. Obwohl eine derartige Aufzeichnungseinheit üblicherweise in herkömmlichen Set-Top-Boxen STB ohnehin vorhanden ist, kann sie grundsätzlich auch in anderen Unterhaltungselektronik-Geräten wie zum Beispiel einem Videorekorder, Festplattenrekorder usw. realisiert werden und insbesondere auch von einem nicht dargestellten Server im Netzwerk N verwirklicht werden (nPVR, network Personalized Video Recorder).

Gemäß Figur 3A wird zunächst über das paketvermittelnde Netz N eines der von den Dienstanbietern P1 bis P3 angebotenen Signale bzw. ein entsprechender TV-Inhalt von der Set-Top-Box STB über die Eingangssignal-Schnittstelle 2 der Set-Top-Box-Erweiterung STBE der Unterhaltungselektronik-Ausgabeeinheit bzw. dem Fernsehgerät TV in üblicher Weise ausgegeben. Die Signalverarbeitungseinheit 5 wird hierbei von der Steuereinheit 7 derart angesteuert, dass das Unterhaltungselektronik-Eingangssignal ND-STB als Unterhaltungselektronik-Ausgangssignal ND-TV an der Ausgangssignal-Schnittstelle 1 ausgegeben wird.

Kommt nunmehr ein Anruf bzw. "Call" zur Zeit der Ausgabe eines jeweils empfangenen Empfangs-Kanals (zum Beispiel BTV) an, so kann von der Set-Top-Box-Erweiterung STBE die Funktion des "Pause-live-TV" via Aufzeichnungseinheit genutzt werden. Grundsätzlich ist es möglich, diese Funktion manuell durch Fernsteuerung der Set-Top-Box STB zu schalten. Dies kann zum Beispiel beim Eintreffen eines Anrufs aus dem Netzwerk N oder beim Umschalten des Anrufs von Audio nach Video sinnvoll sein und steht im Ermessen eines jeweiligen Benutzers. Konfigurierbar kann dies jedoch auch automatisch geschehen. Hierbei sendet die Set-Top-Box-Erweiterung STBE der Set-Top-Box über zum Beispiel die Ethernet-Schnittstelle bzw. das Home-Gateway HG einen entsprechenden Auftrag zur Aufzeichnung eines BTV-Programms auf den in der Set-Top-Box STB lokal integrierten Aufzeichnungseinheit PVR. Dies kann bei Entgegennahme eines Anrufs zum Beispiel generell erfolgen oder nur bei Video-Anrufen bzw. bei Umschaltung eines Audio-Anrufs nach Video.

Genauer gesagt, erfasst hierbei der IP-Telephonie-Client 6 in der Set-Top-Box-Erweiterung STBE den Eingang einer IP-Telephonie-Verbindung, wodurch die Steuereinheit 7 angestoßen wird, eine entsprechende Ansteuerung der Empfangseinheit-Steuereinheit 4 durchzuführen. Der zugehörige Auftrag sollte vorzugsweise nur dann erfolgen, wenn die Set-Top-Box-Erweiterung STBE tatsächlich ein Unterhaltungselektronik-Eingangssignal ND-STB von der Set-Top-Box STB erhält. Die Set-Top-Box-Erweiterung STBE kann daher vorzugsweise eine Eingangsüberwachung aufweisen, mit der sie erkennen kann, ob ein Unterhaltungselektronik-Eingangssignal ND-STB aus der Set-Top-Box STB anliegt oder nicht. Nach Erfassen des Eingangs eines B-seitigen Rufes im Telephonie-Client 6 erfolgt die Information der Steuereinheit 7, die zunächst vorteilhafterweise eine Ausgabe des ankommenden Rufes auf dem Fernsehgerät TV veranlasst. Dies erfolgt vorteilhaft durch Ansteuerung des Mischers der Signalverarbeitungseinheit 5. Nimmt der gerufene Teilnehmer den Ruf entgegen, was ebenfalls vorzugsweise über die Fernsteuerung FB erfolgt, so findet die vorstehend beschriebene Ansteuerung der Set-Top-Box STB statt.

Da die Set-Top-Box-Erweiterung STBE im Allgemeinen zunächst nicht weiß, ob der Zuschauer einen Broadcast-Beitrag, ein Video on Demand (VoD), eine Internet-Seite oder eine bereits aufgenommene Sendung anschaut, benötigt sie Informationen über die Art des ausgegebenen Unterhaltungselektronik-Eingangssignals ND-STB, um in der Set-Top-Box die der jeweiligen Situation angemessene Reaktion auslösen zu können. Insbesondere sollte abhängig von BTV oder VoD/Aufzeichnungswiedergabe entweder die Aufzeichnungseinheit PVR oder eine jeweilige "Pause"-Funktion ausgelöst werden, wohingegen bei reinem Internet-Zugriff keine derartige Reaktion notwendig ist. Im einfachsten Fall fragt daher die Set-Top-Box-Erweiterung STBE über beispielsweise das Ethernet und das Home-Gateway HG die Set-Top-Box STB hinsichtlich ihres Status ab und reagiert damit angemessen.

Sollte diese Abfrage nicht möglich sein, so stehen konfigurierbare Alternativen zur Verfügung, durch die durch erweiterten Nachrichtenverkehr und Auswertung der Auftragsquittungen der Set-Top-Box STB charakterisiert sind. So könnte die Set-Top-Box-Erweiterung STBE vorsorglich stets erst einen "Pause-VoD/PVR"-Ausgabebefehl angeben, der bei negativer Quittung auf einen "START PVR"-Befehl führt, welcher bei abermaliger negativer Quittung den Schluss auf "Gaming" oder "Internet"-Betrieb zulassen mag, der somit keine weiteren Reaktionen vor Durchschaltung des Videobildes des Gesprächspartners auf das Fernsehgerät TV erforderlich macht.

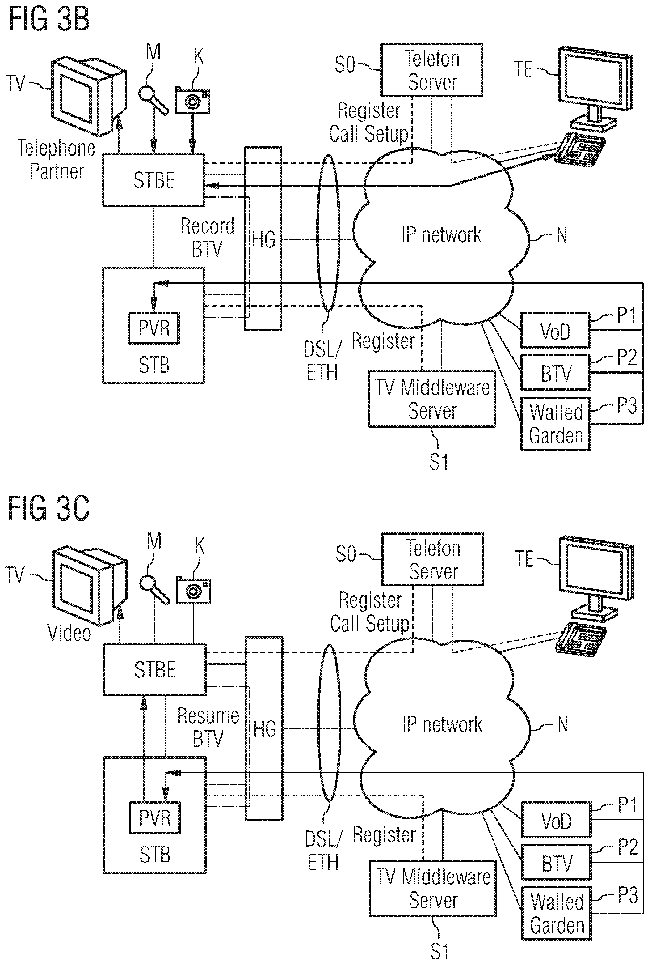

Gemäß Figur 3B ist der Fall eines durch einen Video-Anruf unterbrochenen BTV-Programmstarts dargestellt. Nach der Entgegennahme eines IP-Telephonie-Anrufs wird demzufolge die in der Set-Top-Box STB vorhandene Aufzeichnungseinheit auf Aufnahmebetrieb (Record BTV) umgeschaltet und das gesendete Programm für die Zeitdauer des Anrufs aufgezeichnet.

Gemäß Figur 3C wird nach Beendigung des IP-Telephonie-Anrufs die zwischenzeitlich aufgenommene Aufzeichnung des Programms ohne Datenverlust wiedergegeben (Resume BTV). Demzufolge werden von der Empfangseinheit-Steuereinheit 4 der Set-Top-Box-Erweiterung STBE die Befehle "Record BTV" zum Aufnehmen der Broadcast-Sendung sowie nach Abschluss des Telefonats der Befehl "Resume BTV" zum Wiedergeben der aufgezeichneten Daten und zum gegebenenfalls weiteren Aufnehmen der Sendung ausgegeben.

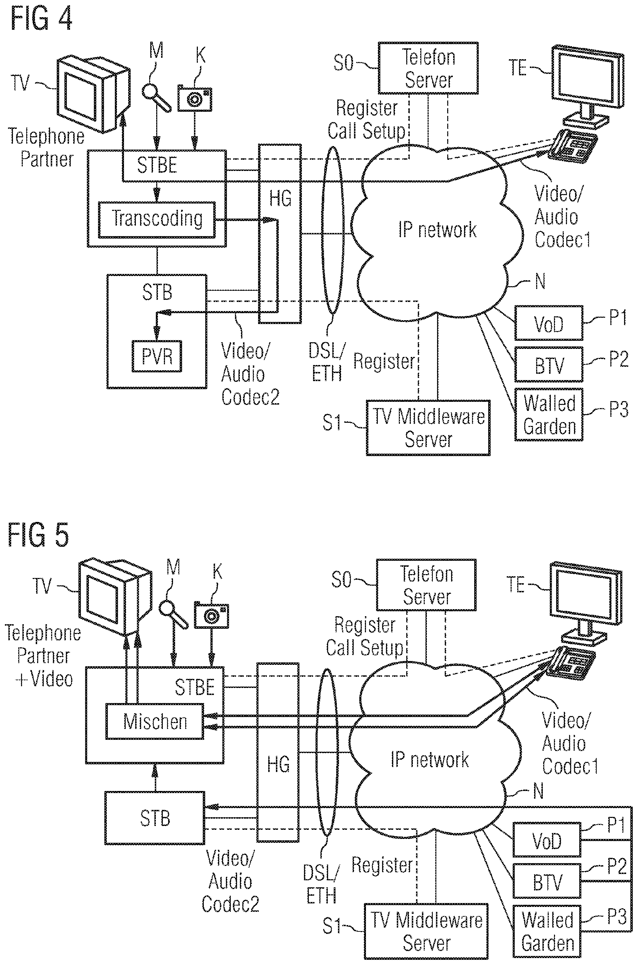

Figur 4 zeigt eine vereinfachte Darstellung zur Veranschaulichung einer IP-Telephonie-Erweiterung in einer Unterhaltungselektronik-Umgebung gemäß einem zweiten Ausführungsbeispiel, wobei gleiche Bezugszeichen gleiche oder entsprechende Elemente wie in den Figuren 1 bis 3 bezeichnen, weshalb auf eine wiederholte Beschreibung nachfolgend verzichtet wird.

Gemäß Figur 4 wird ferner die Möglichkeit einer Aufnahme eines Video-Anrufs auf einer Aufzeichnungseinheit dargestellt. Demzufolge können der vollständige Verlauf eines Video-Anrufs oder Auszüge hiervon mit der Set-Top-Box-Erweiterung STBE über die beispielsweise in der Set-Top-Box STB lokal vorhandene Aufzeichnungseinheit PVR aufgenommen werden. Hierzu wird die in der Signalverarbeitungseinheit 5 vorhandene Transducer-Funktionalität bzw. Signalformat-Umwandlung genutzt. Beispielsweise kann ein bidirektionaler Telefonie-Video-Datenstrom (Video/Audio Codec 1) nach geeigneter Aufbereitung in ein jeweiliges Signalformat (Video/Audio Codec 2) der Set-Top-Box kodiert und der Set-Top-Box STB über z.B. das Home-Gateway HG zugeführt werden. Für die Set-Top-Box STB kann beispielsweise die Situation eines von einem Streamer angebotenen unverschlüsselten Eingangssignals gegeben sein, das auf die Aufzeichnungseinheit PVR zu spielen ist. Die notwendigen Schaltbefehle werden hierbei von der Empfangseinheit-Steuereinheit 4 erzeugt und über das Home-Network (LAN, Local Area Network) von der Set-Top-Box-Erweiterung STBE an die Set-Top-Box STB gesendet. Demzufolge wird das Signalformat "Video/ Audio Codec 1" von der Signalverarbeitungseinheit 5 in das Signalformat "Video/Audio Codec 2" umgewandelt.

Nach Beendigung des Anrufs kann beispielsweise der so im zweiten Signalformat aufgezeichnete Anruf über die analoge oder digitale Schnittstelle zwischen der Set-Top-Box-Erweiterung STBE und der Set-Top-Box STB ausgegeben und zum Beispiel an der Ausgabeeinheit bzw. dem Fernsehgerät TV angezeigt werden.

Da die Aufzeichnung eines Video-Anrufs im Gegensatz zur Aufzeichnung eines Videos zwei Richtungen (Senderichtung und Empfangsrichtung) umfasst, bedarf es einer geeigneten Aufbereitung der Signale in der Set-Top-Box-Erweiterung STBE mittels der Signalverarbeitungseinheit 5. Beispielsweise können die Bildinformationen beider Gesprächspartner unter jeweils hälftiger Nutzung der Anzeigfläche der Ausgabeeinheit bzw. des Fernsehgeräts TV zusammengeführt werden. Hierbei kann zusätzlich die Signal-Mischung in der Signalverarbeitungseinheit 5 der Set-Top-Box STB genutzt werden. Es kann jedoch auch jede weitere Zusammenführung durchgeführt werden, wie zum Beispiel die Ausgabe des eigenen Bildes als kleinen Bildausschnitt oder der völlige Verzicht auf das eigene Bild in der Aufzeichnung. Die Audio-Signale bzw. Tonsignale werden im einfachsten Fall vorzugsweise nach Lautstärkeabgleich addiert. Ist die Aufzeichnungseinheit PVR zur gleichzeitigen Aufnahme von mehreren Kanälen fähig, so besteht ferner die Möglichkeit, die Eingaben beider Partner getrennt als jeweiliges Video zu hinterlegen.

Figur 5 zeigt eine vereinfachte Darstellung der IP-Telephonie-Erweiterung in einer Unterhaltungselektronik-Umgebung gemäß einem dritten Ausführungsbeispiel, wobei wiederum gleiche Bezugszeichen gleiche Elemente bezeichnen wie in Figuren 1 bis 4, weshalb auf eine wiederholte Beschreibung nachfolgend verzichtet wird.

Gemäß Figur 5 sei das Einblenden eines laufenden Empfangs-Programms in einen Video-Anruf erläutert. Demzufolge ist mittels der erfindungsgemäßen Set-Top-Box-Erweiterung STBE auch das gleichzeitige Verfolgen eines Programms bzw. eines Fernsehfilms und die Teilnahme an einem Video-Telefonanruf möglich, ohne dass der ferne Gesprächspartner dies erkennt. Hierzu wird in der Set-Top-Box-Erweiterung STBE das z.B. von der Set-Top-Box STB kommende Unterhaltungselektronik-Eingangssignal zur Ausgabeeinheit bzw. dem Fernsehgerät TV durchgeschaltet und diesem das Bild und gegebenenfalls das Audio-Signal des fernen Gesprächsteilnehmers durch eine Signal-Mischung überlagert.

Dies erfolgt durch geeignetes Mischen beider Signalströme beispielsweise nach Maßgabe des Benutzers. Der ferne Gesprächsteilnehmer kann demzufolge nicht erkennen, dass der Benutzer gleichzeitig ein Fernsehprogramm bzw. einen Film verfolgt, da ihm das Signal des von der Set-Top-Box STB empfangenen Programms nicht zur Verfügung gestellt wird und da das Tonsignal des am Fernsehgerät TV ausgegebenen Tons aus dem ihm übertragenen Tonsignal z.B. mittels eines Echo-Kompensators vollständig oder zumindest teilweise subtrahiert bzw. herausgelöscht wird. Diese Echo-Kompensation wird wiederum durch die Signalverarbeitungseinheit 5 der Set-Top-Box-Erweiterung STBE realisiert.

Ferner kann es aber sein, dass genau dieses Verhalten in einem Video-Telefongespräch einschränkend ist. Das heißt, der ferne Gesprächsteilnehmer möchte neben dem Bild des Gesprächspartners auch gleichzeitig dessen Programm/Film im laufenden Videotelefongespräch miterleben können. Zu diesem Zweck kann die Mischeinrichtung der Set-Top-Box-Erweiterung STBE nicht nur die Ausgabe in Richtung des eigenen Fernsehgeräts TV gestalten, sondern ebenfalls in Richtung des an den fernen Gesprächsteilnehmer auszugebenden Telekommunikations-Ausgangssignals ND-NA. Der ferne Gesprächsteilnehmer kann dann nach Maßgabe des Benutzers das Bild des Benutzers und auch das Bild des Fernsehprogramms bzw. Films in geeigneter Bildaufteilung sowie das nach Lautstärkebewertung addierte Tonsignal des Benutzers und des Fernsehprogramms erhalten.

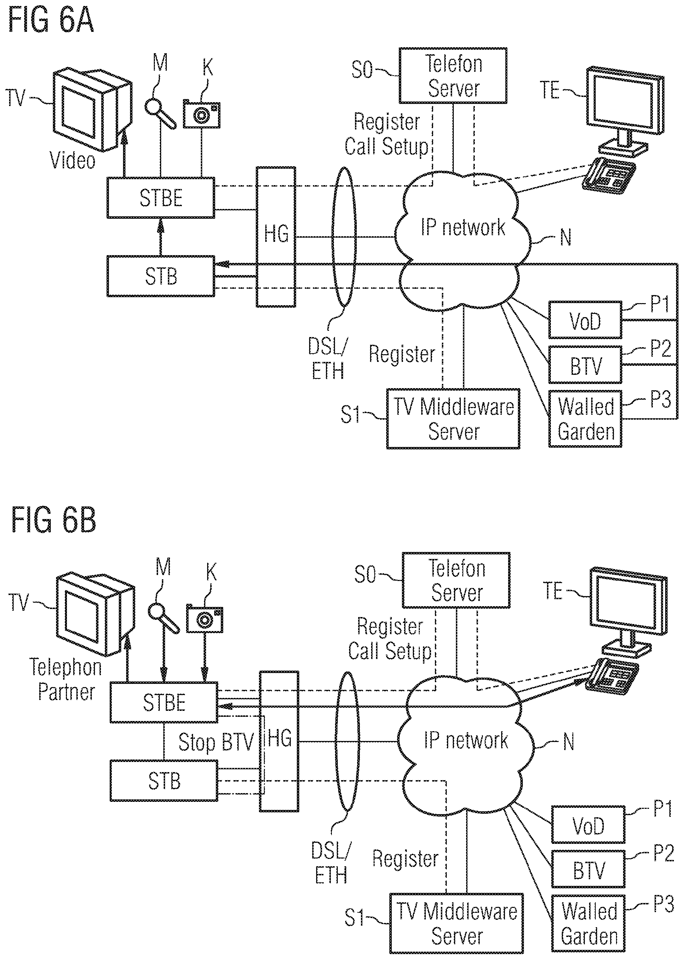

Die Figuren 6A bis 6C zeigen vereinfachte Darstellungen zur Veranschaulichung einer IP-Telephonie-Erweiterung in einer Unterhaltungselektronik-Umgebung gemäß einem vierten Ausführungsbeispiel, wobei gleiche Bezugszeichen gleiche Elemente bezeichnen wie in Figuren 1 bis 5, weshalb auf eine wiederholte Beschreibung nachfolgend verzichtet wird.

Im Ausführungsbeispiel gemäß Figuren 6A bis 6C wird eine Bandbreitenverwaltung bei Parallelbetrieb von Video-Anruf und empfangenem Programm behandelt. Gemäß Figur 6A wird beispielsweise ein Video on Demand (VoD) von einem Dienstanbieter P1 über das Netzwerk N in der Set-Top-Box STB empfangen und über die Set-Top-Box-Erweiterung STBE an die Ausgabeeinheit bzw. das Fernsehgerät TV ausgegeben. Ist nunmehr eine Bandbreite des Netzwerk-Zugangs (DSL/ETH, Ethernet) nicht ausreichend für eine gleichzeitige Übertragung des empfangenen Filmvideos und des eingehenden Video-Anrufes, so kann die Set-Top-Box-Erweiterung STBE frei konfigurierbar eine Bandbreitenverwaltung übernehmen. Steht demzufolge ein Telefonanruf bzw. Video-Call aus dem Netzwerk N an, oder soll aus einem Audio-Call nach Video geschaltet werden, so fragt die Set-Top-Box-Erweiterung STBE vorzugsweise das Vorhandensein eines Unterhaltungselektronik-Eingangssignals von der Set-Top-Box STB ab. Liegt kein Eingangssignal ND-STB an, so wird der Telefonanruf durchgeschaltet. Liegt jedoch ein Eingangssignal ND-STB an, so fragt die Set-Top-Box-Erweiterung STBE die Set-Top-Box STB hinsichtlich ihres Zustands ab. Dies geschieht wiederum über die Empfangseinheit-Steuereinheit 4. Wird beispielsweise ein Broadcast-Programm (BTV) oder ein Video on Demand (VoD) gestreamt, das auf die lokale Aufzeichungseinheit PVR geschrieben wird, so notifiziert die Set-Top-Box-Erweiterung STBE den Benutzer zwecks Entscheidung über das gewünschte Verhalten. Läuft andererseits keine Aufzeichnung über die Aufzeichnungseinheit PVR, so kann der Empfangskanal über die Kommandoschnittstelle abgeschaltet bzw. eine Pause des Video on Demand (VoD) ausgelöst werden und das Telekommunikations-Eingangssignal der Video-Telefonie sodann über die Signalverarbeitungseinheit 5 auf die Ausgabeeinheit TV durchgeschaltet werden.

Läuft eine Aufnahme bzw. Aufzeichnung auf der lokalen Aufzeichnungseinheit PVR und der Zuschauer möchte trotzdem den Video-Anruf annehmen, so kann die Abschaltung/Unterbrechung der Aufnahme zusätzlich über die Steuerung der Set-Top-Box-Erweiterung STBE erfolgen. Nach Beendigung des Telefonanrufs erfolgt die automatische Wiederaufnahme der Durchschaltung des unterbrochenen Empfangs/Programms bzw. die Fortsetzung der unterbrochenen Video-on-Demand-Ausgabe. Beides wird durch die Empfangseinheit-Steuereinheit 4 der Set-Top-Box-Erweiterung STBE initiiert, wobei vorzugsweise die Schnittstelle 3 als Kommandoschnittstelle über das Home-Gateway HG zur Set-Top-Box STB verwendet wird.

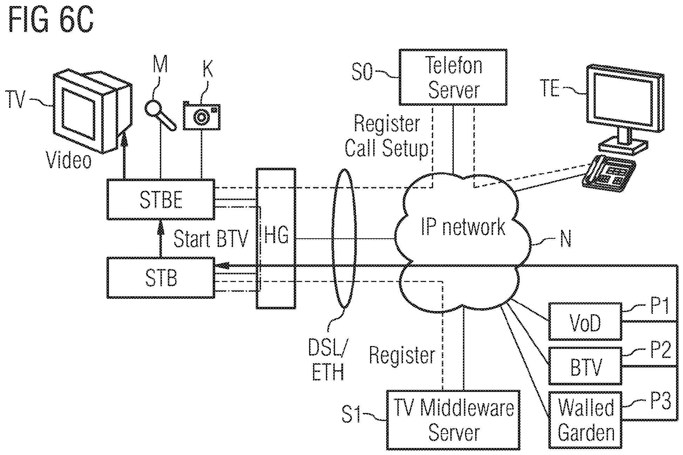

Grundsätzlich kann eine derartige Ansteuerung wiederum über eine zusätzliche Schnittstelle 11 oder über eine bidirektionale Schnittstelle 2 durchgeführt werden, sofern vorhanden. Gemäß Figur 6B wird demzufolge über die Schnittstelle 3 der Befehl "STOP BTV" an die Set-Top-Box abgegeben, wodurch das "Streaming" des empfangenen Senders beendet wird und zusätzliche Bandbreite für das Home-Network geschaffen wird. Der Telefonanruf bzw. das Video-Telefonat kann anschließend in üblicher Weise über das paketvermittelnde Netzwerk N durchgeführt werden. Gemäß Figur 6C wird nach Beenden der IP-Telephonie-Verbindung zum fernen Telekommunikationsendgerät TE wiederum ein Befehl "START BTV" an die Set-Top-Box STB von der Empfangseinheit-Steuereinheit 4 abgesetzt, wodurch die Set-Top-Box STB wieder in den ursprünglichen Betrieb zurückkehrt und das empfangene Programm über die Set-Top-Box-Erweiterung STBE an das Fernsehgerät TV ausgibt.

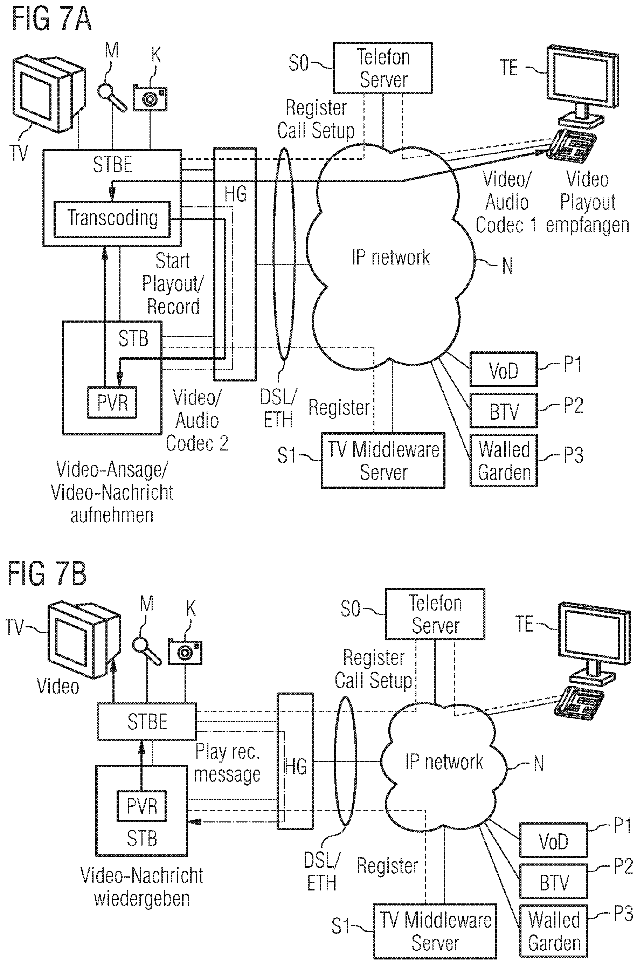

Die Figuren 7A und 7B zeigen vereinfachte Darstellungen zur Veranschaulichung einer IP-Telephonie-Erweiterung in einer Unterhaltungselektronik-Umgebung gemäß einem fünften Ausführungsbeispiel, wobei gleiche Bezugszeichen gleiche Elemente wie in den Figuren 1 bis 6 darstellen, weshalb auf eine wiederholte Beschreibung nachfolgend verzichtet wird.

Gemäß Figuren 7A und 7B wird die Funktionalität einer Video-Mail-Unterstützung mittels der Set-Top-Box-Erweiterung beschrieben.

Gemäß diesem fünften Ausführungsbeispiel ermöglicht die Set-Top-Box-Erweiterung STBE die Nutzung der externen Ressourcen in der Unterhaltungselektronik-Umgebung und beispielsweise der Aufzeichnungseinheit PVR der Set-Top-Box STB als Multimedia/Video-Anrufbeantworter. Trifft demzufolge gemäß Figur 7A ein Telefongespräch ein, das nicht in konfigurierbarer Zeit entgegengenommen werden kann oder soll, so veranlasst die Set-Top-Box-Erweiterung STBE die Entgegennahme des externen Anrufs vorzugsweise als Video-Anruf. Hierbei wird zunächst als Telekommunikations-Ausgangssignal ND-NA ein Video/Audio-Datensignal in Richtung des fernen Gesprächspartners TE abgesetzt, das von einer Aufzeichnungseinheit PVR der Set-Top-Box STB vorgehaltenen Aufnahme ausgespielt und über die Eingangssignal-Schnittstelle 2 der Signalverarbeitungseinheit 5 zugeführt wird. Hierzu startet die Set-Top-Box-Erweiterung STBE bzw. deren Empfangseinheit-Steuereinheit 4 die Ausgabe des aufgezeichneten Inhalts beispielsweise über die Telekommunikationsschnittstelle zur Set-Top-Box STB (ETH/LAN). Ablageformat des aufgezeichneten Begrüßungsvideos ist beispielsweise das Signalformat der Set-Top-Box STB (zum Beispiel MPEG4).

Die Ausgabe in Richtung Set-Top-Box-Erweiterung STBE erfolgt üblicherweise nach Dekodierung in einem analogen/digitalen TV-Format als Signalformat.

In der Signalverarbeitungseinheit 5 der Set-Top-Box-Erweiterung STBE erfolgt nunmehr die Transkodierung bzw. Signalformat-Umwandlung auf das mit dem fernen Gesprächspartner vereinbarte Video/Audio-Format (Video/Audio Codec 1) der IP-Telephonie-Verbindung. Mit Empfang der gespeicherten Video-Botschaft kann der ferne Gesprächspartner beispielsweise aufgefordert werden, eine vorzugsweise Video-Information umfassende Nachricht zu hinterlegen. Diese trifft als Telekommunikations-Eingangssignal ND-NE in der für die IP-Telephonie-Verbindung ausgehandelten Audio- und Video-Kodierung ein und wird der Signalverarbeitungseinheit 5 zugeführt. Anschließend erfolgt wiederum eine Signalformat-Umwandlung auf das Ablageformat der Set-Top-Box (z.B. Video/Audio Codec 2), wobei das umgewandelte Signal nunmehr als Telekommunikations-Ausgangssignal ND-NA über die Telekommunikationsschnittstelle 3 und das Home-Gateway HG an die Set-Top-Box STB und deren Aufzeichnungseinheit PVR weitergegeben wird.

Gleichzeitig kann die Empfangseinheit-Steuereinheit 4 der Set-Top-Box STB den Steuerbefehl zur Aufnahme eines Videos von einem Video-Server erteilt werden, wodurch die Aktion des Aufnehmens von der Set-Top-Box STB durch die Set-Top-Box-Erweiterung STBE mit Durchschalten des Anrufs über die Kommandoschnittstelle 3 signalisiert wird.

Die Eigenschaften des anruferindividuellen Ausspielens von Begrüßungsvideos können optional durch die Set-Top-Box-Erweiterung STBE unterstützt werden. Hierzu ist beispielsweise eine Auswertung der "Call set-up message" (zum Beispiel SIP invite) durch den IP-Telephonie-Client 6 hinsichtlich von den Ursprung charakterisierenden Informationen (Calling Line Identification oder gleichwertige Informationen) notwendig. Das gewünschte Begrüßungsvideo kann davon abhängig wiederum über die Set-Top-Box-Erweiterung STBE konfiguriert werden.

In Figur 7B ist beispielsweise die Wiedergabe der aufgezeichneten Video-Nachricht dargestellt, wobei von der Empfangseinheit-Steuereinheit 4 der Set-Top-Box-Erweiterung STBE über den Befehl "Play recorded Message" die von der Aufzeichnungseinheit PVR aufgezeichnete Video-Nachricht des Gesprächsteilnehmers nach einer eventuellen Signalformat-Umwandlung in der Set-Top-Box-Erweiterung STBE am Fernsehgerät TV ausgegeben wird.

Die Funktionalität eines derartig realisierten Multimedia/Video-Anrufbeantworters kann zusätzlich zum laufenden Empfang (BTV/VoD/Internet) der Set-Top-Box STB aktiv sein. Ferner kann sie über die Fernbedienung FB fallweise aktiviert werden, falls der Betrachter nach dem Pop-up der Kennung des Anrufers es vorzieht, das empfangene Programm weiter zu verfolgen, anstatt den Telefonanruf entgegenzunehmen. In diesem Falle kann die Eingabe des fernen Gesprächsteilnehmers als Bildausschnitt auf den Fernsehgerät TV und sein Tonsignal über die Signal-Mischung der Signalverarbeitungseinheit 5 zugemischt werden. Liegt entgegen der Erwartung des Benutzers nun doch ein interessanter Telefonanruf vor, so kann er über Bedieneingaben an beispielsweise der Fernbedienung FB den Telefonanruf über die Set-Top-Box-Erweiterung STBE entgegennehmen und zum Beispiel die laufende Aufnahme abbrechen. Hierbei können auch die in den Ausführungsbeispielen 1 bis 3 aufgeführten weiteren Optionen zusätzlich realisiert werden.

Die Set-Top-Box STB unterstützt demzufolge die Aufnahme einer Video-Begrüßungsnachricht durch Aufnahme der Informationen auf der Aufzeichnungseinheit PVR und gleichzeitiger mitlaufender Ausgabe dieser Bildinformationen als Vollbild oder Teilbild auf der Ausgabeeinheit bzw. dem Fernsehgerät TV. Die Steuereinheit 7 der Set-Top-Box-Erweiterung STBE steuert hierbei die Signalverarbeitungseinheit 5 in geeigneter Weise. Zur Komposition perfekter Begrüßungsvideos stehen darüber hinaus die Ressourcen der gesamten Unterhaltungselektronik-Umgebung zur Verfügung.

Obwohl üblicherweise als Aufzeichnungseinheit PVR eine lokale Aufzeichnungseinheit in einem der Geräte der Unterhaltungselektronik-Umgebung verwendet wird, kann grundsätzlich auch eine netzwerkbasierte Aufzeichnungseinheit (nicht dargestellt) verwendet werden, die beispielsweise von einem Aufzeichnungsserver im Netz zur Verfügung gestellt wird.

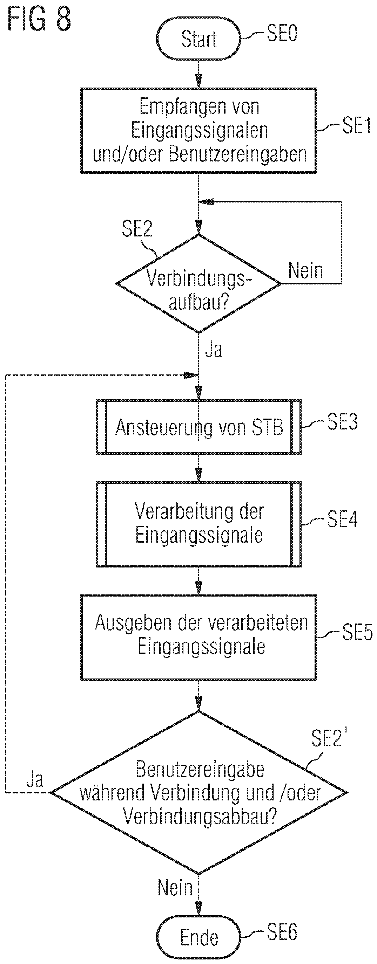

Figur 8 zeigt ein vereinfachtes Flussdiagramm zur Veranschaulichung wesentlicher Verfahrensschritte zur Unterstützung von IP-Telephonie in einer Unterhaltungselektronik-Umgebung.

Gemäß Figur 8 werden nach einem Start in Schritt SEO zunächst Eingangssignale in der Set-Top-Box-Erweiterung STBE empfangen und ausgewertet (Schritt SE1). Dies sind beispielsweise Unterhaltungselektronik-Eingangssignale ND-STB, wie sie beispielsweise von einer Set-Top-Box STB kommen können und/oder Eingangssignale ES, SD, ND-NE, wie sie bei einer IP-Telephonie-Verbindung vorliegen. In einem Schritt SE2 wird das Vorliegen einer IP-Telephonie-Verbindung im Telekommunikations-Eingangssignal erfasst. Sobald eine IP-Telephonie-Verbindung bzw. ein eingehender Anruf vorliegt, erfolgt eine konfigurierbare Ansteuerung einer Signalverarbeitung und/oder eine konfigurierbare Ansteuerung einer externen Unterhaltungselektronik-Empfangseinheit wie beispielsweise einer Set-Top-Box STB. Vorzugsweise wird bei Eintreffen eines Rufes eine Visualisierung dieses Ereignisses auf dem Fernsehgerät TV erfolgen, was über die Signalverarbeitungseinheit 5 unter Steuerung der Steuerungseinheit 7 erfolgt. Erst nach Eingabe des Benutzers zur Entgegennahme des Rufs erfolgt in Schritt SE3 die Ansteuerung der Unterhaltungselektronik-Empfangseinheit STB. In einem nachfolgenden Schritt SE4 werden nunmehr die Eingangssignale zum Erzeugen eines Unterhaltungs-Ausgangssignals und/oder eines Telekommunikations-Ausgangssignals ND-NA derart verarbeitet, dass sich eine gewünschte Funktionalität ergibt und die verarbeiteten Signale in einem Schritt SE5 zumindest an der Ausgabeeinheit TV ausgegeben werden können. Zusätzlich zum erzeugten Unterhaltungs-Ausgangssignal kann auch ein entsprechendes Telekommunikations-Ausgangssignal an die Telekommunikationsschnittstelle ausgegeben werden. Das Verfahren endet im Schritt SE6.

Die Ansteuerung der Unterhaltungselektronik-Empfangseinheit STB gemäß Schritt SE3 sowie die Verarbeitung der Eingangssignale zum Erzeugen von Ausgangssignalen in Schritt SE4 sowie das jeweilige Ausgeben der erzeugten Ausgangssignale kann wiederum derart gesteuert werden, dass sich die als beispielhaft beschriebenen Ausführungsbeispiele gemäß Figuren 3 bis 7 realisieren lassen.

Gemäß Figur 8 können alternativ oder zusätzlich zu den vorstehend beschriebenen Schritten SE1 bis SE5 Benutzereingaben und/oder ein Verbindungsabbau während einer bestehenden Telephonie-Verbindung in einem weiteren Verfahrensschritt SE2' ausgewertet werden. Liegen demgemäß solche Benutzereingaben oder der Fall eines Verbindungsabbaus vor, führen diese zur erneuten Abarbeitung der Verfahrensschritte SE3 bis SE5 oder zur Beendigung des Verfahrens. Hintergrund ist, dass ein Benutzer in einer laufenden Verbindung verfahrensgemäß eine Vielzahl von Manipulationsmöglichkeiten hinsichtlich der Ausgabesignale hat, wie vorstehend bereits ausführlich beschrieben wurde.

Der Vollständigkeit halber sei erwähnt, dass das Verfahren ebenfalls einen abgehenden Anruf unterstützt. Es sei also angenommen, dass der Benutzer ein Unterhaltungselektronik-Ausgangssignal verfolgt, womit sich das Verfahren im Zustand SE1 befindet. Soll nun ein abgehender Anruf aufgebaut werden, so erfolgt dies über Eingaben über die Eingabeeinheit bzw. Fernbedienung FB. Dies hat zur Folge, dass nach Annahme des Rufs durch den gerufenen Teilnehmer ein Verbindungsaufbau erfolgt, der gemäß Verfahrensschritt SE2 erfasst wird und die Verfahrenschritte SE3 bis SE5 zur Folge hat. Aufgrund dieser Verfahrensschritte kann beispielsweise und vorzugsweise auf dem lokalen Fernsehgerät TV das eigene Bild, Bild und Ton des Ausgabesignals der Unterhaltungselektronik-Empfangseinheit STB sowie Bild und Ton des fernen Telephonie-Teilnehmers TE ausgegeben werden und gleichzeitig das eigene Bild und das um das Ausgabetonsignal des Fernsehgeräts TV bereinigte eigene Tonsignal in Richtung des fernen Telephonie-Teilnehmers ausgegeben werden.

Im Gesprächszustand kann wiederum der Verfahrensschritt SE2' zur Anwendung kommen, welcher die Manipulation der Ausgabesignale gemäß den Vorgaben des Benutzers ermöglicht und hierbei jeweils das erneute Durchlaufen der Verfahrenschritte SE3 bis SE5 zur Folge hat. Im Verfahrensschritt SE2' hat die lokale Beendigung des Rufs die erneute Abarbeitung der Verfahrensschritte SE3 bis SE5 zur Folge, also beispielsweise die Durchschaltung des Ausgangssignals der Unterhaltungselektronik-Empfangseinheit STB auf das Fernsehgerät TV. Der Verfahrensschritt SE2' wird durch die Beendigung der Verbindung verlassen, womit der Verfahrensschritt SE6 erreicht wird. Letzteres erfolgt ebenfalls bei Beendigung der Verbindung durch den fernen Teilnehmer.

Die Erfindung wurde vorstehend anhand einer Set-Top-Box STB und eines Fernsehgeräts TV innerhalb eines Home-Networks beispielhaft beschrieben. Sie ist jedoch nicht darauf beschränkt und umfasst in gleicher Weise auch alternative Unterhaltungselektronik-Empfangseinheiten und Unterhaltungselektronik-Ausgabeeinheiten. Ferner wurde die Erfindung anhand eines Video-Telefongesprächs beschrieben. Sie ist jedoch nicht darauf beschränkt und umfasst in gleicher Weise reine Audio-Telefonate, reine Bild-Übertragung oder sonstige Daten, die mittels IP üblicherweise in einem paketvermittelnden Netz übertragen werden können.

## Patentansprüche

1. Vorrichtung zur Unterstützung von IP-Telephonie in einer Unterhaltungselektronik-Umgebung mit:
einer Empfangseinheit-Steuereinheit (4) zum Steuern einer Unterhaltungselektronik-Empfangseinheit (STB);
einer Signalverarbeitungseinheit (5) zum Verarbeiten eines empfangenen Unterhaltungselektronik-Eingangssignals (ND-STB) und/oder eines Telekommunikations-Eingangssignals (ND-NE) und zum Erzeugen eines Unterhaltungselektronik-Ausgangssignals (ND-TV) und/oder eines Telekommunikations-Ausgangssignals (ND-NA), wobei die Signalverarbeitungseinheit (5) ferner ein lokales Audio-Eingangssignal (MS) und/oder ein lokales Bild-Eingangssignal (KS) verarbeitet;
einem IP-Telephonie-Client (6) zur Realisierung einer IP-Telephonie-Verbindung; und
einer Steuereinheit (7) zum Steuern der Signalverarbeitungseinheit (5), des IP-Telephonie-Clients (6) und der Empfangseinheit-Steuereinheit (4),
**dadurch gekennzeichnet, dass**
die Signalverarbeitungseinheit (5) zur Anpassung an beliebige Unterhaltungselektronik-Umgebungen eine Signalformat-Umwandlung zum Umwandeln eines Signalformats der Unterhaltungselektronik-Signale in ein Signalformat der Telekommunikations-Signale und umgekehrt realisiert, und
die Signalverarbeitungseinheit (5) eine Echo-Kompensation zum vollständigen oder teilweisen Auslöschen von Signalkomponenten im lokalen Audio- und/oder Bild-Eingangssignal (MS, KS),
die mit dem Unterhaltungselektronik-Eingangssignal (ND-STB) korreliert sind, realisiert.

2. Vorrichtung nach Patentanspruch 1,
**dadurch gekennzeichne**t, dass die Unterhaltungselektronik-Empfangseinheit (STB) eine Aufzeichnungseinheit (PVR) aufweist, und die Empfangseinheit-Steuereinheit (4) eine Aufzeichnungs- und/oder Wiedergabe-Funktionalität (Record, Play, ...) der Aufzeichnungseinheit (PVR) der Unterhaltungselektronik-Empfangseinheit (STB) steuert.

3. Vorrichtung nach einem der Patentansprüche 1 oder 2,
**dadurc**h **gekennzeichnet**, dass die Signalverarbeitungseinheit (5) eine Signal-Auswahl zum Auswählen des Telekommunikations-Eingangssignals (ND-NE) oder des Unterhaltungselektronik-Eingangssignals (ND-STB) als Unterhaltungselektronik-Ausgangssignal (ND-TV) realisiert.

4. Vorrichtung nach einem der Patentansprüche 1 bis 3,
**dadurch gekennzeichnet, dass** die Signalverarbeitungseinheit (5) eine Signal-Auswahl zum Auswählen des lokalen Audio- und/oder Bild-Eingangssignals (MS, KS) oder des Unterhaltungselektronik-Eingangssignals (ND-STB) als Telekommunikations-Ausgangssignal (ND-NA) realisiert.

5. Vorrichtung nach einem der Patentansprüche 1 bis 4,
**dadurch gekennzeichnet,dass** die Signalverarbeitungseinheit (5) eine Signal-Mischung zum Mischen des Telekommunikations-Eingangssignals (ND-NE) und des Unterhaltungselektronik-Eingangssignals (ND-STB) zu einem Unterhaltungselektronik-Ausgangssignal (ND-TV) realisiert.

6. Vorrichtung nach einem der Patentansprüche 1 bis 5,
**dadurch gekennzeichnet, dass** die Signalverarbeitungseinheit (5) eine Signal-Mischung zum Mischen des lokalen Audio- und/oder Bild-Eingangssignals (MS, KS) mit dem Unterhaltungselektronik-Eingangssignal (ND-STB) zu einem Telekommunikations-Ausgangssignal (ND-NA) realisiert.

7. Vorrichtung nach einem der Patentansprüche 1 bis 6,
**dadurch gekennzeichnet, dass** die Signalverarbeitungseinheit (5) eine Signalformat-Umwandlung zum Umwandeln des Signalformats des lokalen Audio- und/oder Bild-Eingangssignals (MS, KS) in das Signalformat der Telekommunikations-Signale und/oder der Unterhaltungselektronik-Signale realisiert.

8. Vorrichtung nach einem der Patentansprüche 1 bis 7,
**dadurch gekennzeichnet, dass** die Empfangseinheit-Steuereinheit (4) eine Empfangs-Funktionalität (START TV, STOP TV) der Unterhaltungselektronik-Empfangseinheit (STB) steuert.

9. Vorrichtung nach Patentanspruch 8,
**dadurch gekennzeichnet, dass** die Empfangs-Funktionalität (START TV, STOP TV) in Abhängigkeit von einer Entgegennahme oder Beendigung eines Rufs über den IP-Telephonie-Client (6) gesteuert wird.

10. Vorrichtung nach einem der Patentansprüche 1 bis 9,
**dadurch gekennzeichnet, dass** die Steuerung der Aufzeichnungs- und/oder Wiedergabe-Funktionalität in Abhängigkeit von Kriterien erfolgt.

11. Vorrichtung nach einem der Patentansprüche 10,
**dadurch gekennzeichnet, dass** das über die Telekommunikationsschnittstelle empfangene und ggf.
gewandelte Signal (ND-NE) der Aufzeichnungsfunktionalität der Unterhaltungselektronik-Empfangseinheit (STB) auf Anforderung des Benutzers über die Eingabeeinheit (FB) oder automatisch zugeführt wird.

12. Vorrichtung nach einem der Patentansprüche 10 oder 11,
**dadurch gekennzeichnet, dass** ein von der Wiedergabe-Funktionalität der Unterhaltungselektronik-Empfangseinheit (STB) empfangenes Signal (ND-STB) als Unterhaltungselektronik-Ausgangssignal (ND-TV) und/oder ggf. nach Signalwandlung als Telekommunikations-Ausgangssignal (ND-NA) auf Anforderung des Benutzers über die Eingabeeinheit (FB) oder automatisch ausgegeben wird.

13. Vorrichtung nach einem der Patentansprüche 1 bis 12,
**dadurch gekennzeichnet, dass** die Empfangseinheit-Steuereinheit (4) die Unterhaltungselektronik-Empfangseinheit (STB) mittelbar über eine zur Telekommunikation genutzte Schnittstelle (3) steuert.

14. Vorrichtung nach einem der Patentansprüche 1 bis 13,
**dadurch gekennzeichnet, dass** die Empfangseinheit-Steuereinheit (4) die Unterhaltungselektronik-Empfangseinheit (STB) unmittelbar über eine zusätzliche Steuerschnittstelle (11, 2) ansteuert.

15. Verfahren zur Unterstützung von IP-Telephonie in einer Unterhaltungselektronik-Umgebung mit den Schritten:
Empfangen (SE1) von Unterhaltungselektronik-Eingangssignalen (ND-STB), von Telekommunikations-Eingangssignalen (SD, ND-NE) und von Eingabe-Steuerdaten (ES) von einer Eingabeeinheit (FB) ;
Empfangen von einem lokalen Audio-Eingangssignal (MS) von einer Audio-Aufnahmeeinheit (M); und
Empfangen von einem lokalen Bild-Eingangssignal (KS) von einer Bild-Aufnahmeeinheit (K), wobei das lokale Audio- und lokale Bild-Eingangssignal (MS, KS) der Signalverarbeitungseinheit (5) zugeführt wird;
Erfassen (SE2) einer IP-Telephonie-Verbindung im Telekommunikations-Eingangssignal (SD, ND-NE);
Ansteuern (SE3) einer Unterhaltungselektronik-Empfangseinheit (STB) in Abhängigkeit von der erfassten IP-Telephonie-Verbindung;
Verarbeiten (SE4) der Eingangssignale zum Erzeugen eines Unterhaltungselektronik-Ausgangssignals (ND-TV) und/oder eines Telekommunikations-Ausgangssignals (ND-NA); und
Ausgeben (SE5) des erzeugten Unterhaltungselektronik- und/ oder Telekommunikations-Ausgangssignals, **gekennzeichnet dadurch, dass** beim Verarbeiten eine Echo-Kompensation durchgeführt wird, wobei Signalkomponenten im lokalen Audio- und/oder Bild-Eingangssignal (MS, KS), die mit dem Unterhaltungselektronik-Eingangssignal (ND-STB) korreliert sind, teilweise oder vollständig ausgelöscht werden, und
beim Verarbeiten (SE4) eine Signalformat-Umwandlung zur Anpassung an beliebige Unterhaltungselektronik-Umgebungen durchgeführt wird, wobei ein Signalformat der Unterhaltungselektronik-Signale in ein Signalformat der Telekommunikations-Signale umgewandelt wird und umgekehrt.

16. Verfahren nach Patentanspruch 15,
**dadurch gekennzeichne**t, dass beim Ansteuern (SE3) der Unterhaltungselektronik-Empfangseinheit (STB) eine Aufzeichnungs- und/oder Wiedergabe-Funktionalität (Record, Play, ...) einer Aufzeichnungseinheit (PVR) der Unterhaltungselektronik-Empfangseinheit (STB) gesteuert wird.

17. Verfahren nach Patentanspruch 15 oder 16,
**dadurch gekennzeichnet, dass** die Ansteuerung der Unterhaltungselektronik-Empfangseinheit (STB), die Verarbeitung der Eingangssignale und/oder die Ausgabe des erzeugten Ausgangssignals in Abhängigkeit von den empfangenen Eingabesteuerdaten (ES) erfolgt.

18. Verfahren nach einem der Patentansprüche 15 bis 17,
**dadurch gekennzeichnet, dass** beim Ansteuern (SE3) der Unterhaltungselektronik-Empfangseinheit (STB) eine Eingangssignal-Auswahl durchgeführt wird, wobei aus einer Vielzahl von Signalquellen (P1, P2, P3, STBE) eine gewünschte Signalquelle ausgewählt wird.

## Claims

1. A device for support of IP telephony in a consumer-electronics environment comprising:
a receiving-unit control unit (4) to control a consumer-electronics receiving unit (STB);
a signal processing unit (5) to process a received consumer-electronics input signal (ND-STB) and/or a telecommunications input signal (ND-NE) and
to generate a consumer-electronics output signal (ND-TV) and/or a telecommunications output signal (ND-NA), wherein the signal processing unit (5) furthermore processes a local audio input signal (MS) and/or a local image input signal (KS);
an IP telephony client (6) to establish an IP telephony connection; and
a control unit (7) to control the signal processing unit (5) of the IP telephony client (6) and the receiving-unit control unit (4),
**characterized in that**,
in order to adapt to any consumer-electronics environments, the signal processing unit (5) implements a signal-format conversion to convert a signal format of the consumer-electronics signals into a signal format of the telecommunications signals and vice versa, and the signal processing unit (5) implements an echo compensation for the full or partial elimination of signal components in the local audio and/or image input signal (MS, KS), which are correlated with the consumer-electronics input signal (ND-STB).

2. The device according to Patent Claim 1,
**characterized in that**,
the consumer-electronics receiving unit (STB) has a recording unit (PVR) and the receiving-unit control unit (4) controls a recording and/or playback functionality (record, play,...) of the recording unit (PVR) of the consumer-electronics receiving unit (STB).

3. The device according to one of the Patent Claims 1 or 2,
**characterized in that**,
the signal processing unit (5) implements a signal selection to select the telecommunications input signal (ND-NE) or the consumer-electronics input signal (ND-STB) as a consumer-electronics output signal (ND-TV).

4. The device according to one of the Patent Claims 1 to 3,
**characterized in that**,
the signal processing unit (5) implements a signal selection to select the local audio and/or image input signal (MS, KS) or the consumer-electronics input signal (ND-STB) as a telecommunications output signal (ND-NA).

5. The device according to one of the Patent Claims 1 to 4,
**characterized in that**,
the signal processing unit (5) implements signal mixing to mix the telecommunications input signal (ND-NE) and the consumer-electronics input signal (ND-STB) into a consumer-electronics output signal (ND-TV).

6. The device according to one of the Patent Claims 1 to 5,
**characterized in that**
the signal processing unit (5) implements signal mixing to mix the local audio and/or image input signal (MS, KS) with the consumer-electronics input signal (ND-STB) into a telecommunications output signal (ND-NA).

7. The device according to one of the Patent Claims 1 to 6,
**characterized in that**,
the signal processing unit (5) implements a signal-format conversion to convert the signal format of the local audio and/or image input signal (MS, KS) into the signal format of the telecommunication signals and/or the consumer-electronics signals.

8. The device according to one of the Patent Claims 1 to 7,
**characterized in that**,
the receiving-unit control unit (4) controls a receiving functionality (START TV, STOP TV) of the consumer-electronics receiving unit (STB).

9. The device according to Patent Claim 8,
**characterized in that**,
the receiving functionality (START TV, STOP TV) is controlled depending on accepting or ending a call via the IP telephony client (6).

10. The device according to one of the Patent Claims 1 to 9,
**characterized in that**
the control of the recording and/or playback functionality takes place depending on criteria.

11. The device according to one of the Patent Claims 10,
**characterized in that**,
signals (ND-NE) received via the telecommunications interface and, where applicable, converted are supplied to the recording functionality of the consumer-electronics receiving unit (STB) on request of the user via the input unit (FB) or automatically.

12. The device according to one of the Patent Claims 10 or 11,
**characterized in that**,
a signal (ND-STB) received by the playback functionality of the consumer-electronics receiving unit (STB) is output as a consumer-electronics output signal (ND-TV) and/or, where applicable, following signal conversion, as a telecommunications output signal (ND-NA) on request of the user via the input unit (FB) or automatically.

13. The device according to one of the Patent Claims 1 to 12.
**characterized in that**,
the receiving-unit control unit (4) controls the consumer-electronics receiving unit (STB) indirectly via an interface (3) used for telecommunications.

14. The device according to one of the Patent Claims 1 to 13.
**characterized in that**
the receiving-unit control unit (4) controls the consumer-electronics receiving unit (STB) directly via an additional control interface (11, 2).

15. A method for support of IP telephony in a consumer-electronics environment comprising the steps:
receiving (SE1) consumer-electronics input signals (ND-STB), telecommunications input signals (SD, ND-NE) and input control data (ES) from an input unit (FB);
receiving a local audio input signal (MS) from an audio recording unit (M); and
receiving a local image input signal (KS) from an image recording unit (K), wherein the local audio and local image input signal (MS, KS) is supplied to the signal processing unit (5) ;
detecting (SE2) an IP telephony connection in the telecommunications input signal (SD, ND-NE);
controlling (SE3) a consumer-electronics receiving unit (STB) depending on the detected IP telephony connection;
processing (SE4) the input signals to generate a consumer-electronics output signal (ND-TV) and/or a telecommunications output signal (ND-NA); and
outputting (SE5) the generated consumer-electronics and/or telecommunications output signal,
**characterized in that**,
during processing, and echo compensation is carried out, wherein signal components in the local audio and/or image input signal (MS, KS), which are correlated with the consumer-electronics input signal (ND-STB), are partially or completely eliminated and,
during processing (SE4), a signal-format conversion to adapt to any consumer-electronics environments is carried out, wherein a signal format of the consumer-electronics signals is converted into a signal format of the telecommunication signals and vice versa.

16. The method according to Patent Claim 15,
**characterized in that**,
when controlling (SE3) the consumer-electronics receiving unit (STB), a recording and/or playback functionality (record, play,...) of a recording unit (PVR) of the consumer-electronics receiving unit (STB) is controlled.

17. The method according to Patent Claim 15 or 16,
**characterized in that**
the control of the consumer-electronics receiving unit (STB), the processing of the input signals and/or the output of the generated output signals occurs depending on the received input control data (ES).

18. The method according to one of the Patent Claims 15 to 17,
**characterized in that**,
when controlling (SE3) the consumer-electronics receiving unit (STB), an input-signal selection is carried out, wherein a desired signal source is selected from a variety of signal sources (P1, P2, P3, STBE).

## Revendications

1. Dispositif pour assister la téléphonie Internet dans un environnement d'électronique de divertissement comprenant :
une unité de réception - unité de commande (4) permettant de commander une unité de réception d'électronique de divertissement (STB),
une unité de traitement de signal (5) permettant de traiter un signal d'entrée d'électronique de divertissement (ND-STB) reçu et/ou un signal d'entrée de télécommunication (ND-NE) et de produire un signal de sortie d'électronique de divertissement (ND-TV) et/ou un signal de sortie de télécommunication (ND-NA), l'unité de traitement de signal (5) traitant en outre un signal d'entrée audio local (MS) et/ou un signal d'entrée vidéo local (KS),
un client de téléphonie Internet (6) permettant d'établir une liaison de téléphonie Internet, et
une unité de commande (7) pour commander l'unité de traitement de signal (5), le client de téléphonie Internet (6) et l'unité de réception-unité de commande (4),
**caractérisé en ce que** l'unité de traitement de signal (5) réalise, pour s'adapter à des quelconques environnements d'électronique de divertissement, une conversion du format de signal pour convertir un format de signal des signaux d'électronique de divertissement en un format de signal des signaux de télécommunication et inversement, et l'unité de traitement de signal (5) réalise une compensation d'écho pour supprimer entièrement ou partiellement des composantes de signal dans le signal local d'entrée audio et/ou vidéo (MS, KS) qui sont corrélées avec le signal d'entrée d'électronique de divertissement (ND-STB).

2. Dispositif selon la revendication 1,
**caractérisé en ce que** l'unité de réception d'électronique de divertissement (STB) comprend une unité d'enregistrement (PVR), et l'unité de réception-unité de commande (4) commande une fonctionnalité d'enregistrement et/ou de reproduction (Record, Play, ...) de l'unité d'enregistrement (PVR) de l'unité de réception d'électronique de divertissement (STB).

3. Dispositif selon l'une des revendications 1 ou 2,
**caractérisé en ce que** l'unité de traitement de signal (5) réalise une sélection de signal pour sélectionner le signal d'entrée de télécommunication (ND-NE) ou le signal d'entrée d'électronique de divertissement (ND-STB) afin de former le signal de sortie d'électronique de divertissement (ND-TV).

4. Dispositif selon l'une quelconque des revendications 1 à 3,
**caractérisé en ce que** l'unité de traitement de signal (5) réalise une sélection de signal pour sélectionner le signal d'entrée local audio et/ou vidéo (MS, KS) ou le signal d'entrée d'électronique de divertissement (ND-STB) afin de former un signal de sortie de télécommunication (ND-NA).

5. Dispositif selon l'une quelconque des revendications 1 à 4,
**caractérisé en ce que** l'unité de traitement de signal (5) réalise un mélange de signal pour mélanger le signal d'entrée de télécommunication (ND-NE) et le signal d'entrée d'électronique de divertissement (ND-STB) afin de former un signal de sortie d'électronique de divertissement (ND-TV).

6. Dispositif selon l'une quelconque des revendications 1 à 5,
**caractérisé en ce que** l'unité de traitement de signal (5) réalise un mélange de signal pour mélanger le signal d'entrée local audio et/ou vidéo (MS, KS) avec le signal d'entrée d'électronique de divertissement (ND-STB) afin de former un signal de sortie de télécommunication (ND-NA).

7. Dispositif selon l'une quelconque des revendications 1 à 6,
**caractérisé en ce que** l'unité de traitement de signal (5) réalise une conversion du format de signal pour convertir le format du signal d'entrée local audio et/ou vidéo (MS, KS) en un format de signal des signaux de télécommunication et/ou des signaux d'électronique de divertissement.

8. Dispositif selon l'une quelconque des revendications 1 à 7,
**caractérisé en ce que** l'unité de réception-unité de commande (4) commande une fonctionnalité de réception (START TV, STOP TV) de l'unité de réception d'électronique de divertissement (STB).

9. Dispositif selon la revendication 8,
**caractérisé en ce que** la fonctionnalité de réception (START TV, STOP TV) est activée en fonction d'une acceptation ou d'une cessation d'un appel par le client de téléphonie Internet (6).

10. Dispositif selon l'une quelconque des revendications 1 à 9,
**caractérisé en ce que** la commande de la fonctionnalité d'enregistrement et/ou de reproduction s'effectue en fonction de critères.

11. Dispositif selon l'une quelconque des revendications 1 à 10,
**caractérisé en ce que** le signal reçu via l'interface de communication et éventuellement converti (ND-NE) de la fonctionnalité d'enregistrement de l'unité de réception d'électronique de divertissement (STB) est appliqué sur demande de l'utilisateur par l'unité d'entrée (FB) ou automatiquement.

12. Dispositif selon l'une des revendications 10 ou 11,
**caractérisé en ce qu'**un signal (ND-STB) reçu de la fonctionnalité de reproduction de l'unité de réception d'électronique de divertissement (STB) est délivré en tant que signal de sortie d'électronique de divertissement (ND-TV) et/ou éventuellement, après conversion du signal, sous forme de signal de sortie de télécommunication (ND-NA) sur demande de l'utilisateur par l'unité d'entrée (FB) ou automatiquement.

13. Dispositif selon l'une quelconque des revendications 1 à 12,
**caractérisé en ce que** l'unité de réception-unité de commande (4) commande l'unité de réception d'électronique de divertissement (STB) indirectement par l'intermédiaire d'une interface (3) utilisée pour la télécommunication.

14. Dispositif selon l'une quelconque des revendications 1 à 13,
**caractérisé en ce que** l'unité de réception-unité de commande (4) commande l'unité de réception d'électronique de divertissement (STB) directement via une interface de commande supplémentaire (11, 2).

15. Procédé pour assister la téléphonie Internet dans un environnement d'électronique de divertissement, comprenant les étapes suivantes :
réception (SE1) de signaux d'entrée d'électronique de divertissement (ND-STB), de signaux d'entrée de télécommunication (SD, ND-NE) et de données de commande d'entrée (ES) provenant d'une unité d'entrée (FB),
réception d'un signal local audio (MS) d'une unité d'enregistrement audio (M), et
réception d'un signal d'entrée vidéo local (KS) d'une unité d'enregistrement vidéo (K), le signal d'entrée local audio et local vidéo (MS, KS) étant appliqué à l'unité de traitement de signal (5),
détection (SE2) d'une liaison de téléphonie Internet dans le signal d'entrée de télécommunication (SD, ND-NE),
commande (SE3) d'une unité de réception d'électronique de divertissement (STB) en fonction de la liaison de téléphonie Internet détectée,
traitement (SE4) des signaux d'entrée afin de produire un signal de sortie d'électronique de divertissement (ND-TV),et/ou un signal de sortie de télécommunication (ND-NA); et
délivrance (SE5) du signal de sortie produit d'électronique de divertissement et/ou de télécommunication,
**caractérisé en ce que**
lors du traitement, une compensation d'écho est réalisée, par laquelle des composantes de signal dans le signal d'entrée local audio et/ou vidéo (MS, KS) qui sont corrélées avec le signal d'entrée d'électronique de divertissement (ND-STB) sont supprimées en partie ou entièrement, et
lors du traitement (SE4), une conversion du format de signal pour s'adapter à des quelconques environnements d'électronique de divertissement est réalisée, par laquelle un format de signal des signaux d'électronique de divertissement est converti en un format de signal des signaux de télécommunication, et inversement.

16. Procédé selon la revendication 15,
**caractérisé en ce que**, lors de la commande (SE3) de l'unité de réception d'électronique de divertissement (STB), une fonctionnalité d'enregistrement et/ou de reproduction (Record, Play,..) d'une unité d'enregistrement (PVR) de l'unité de réception d'électronique de divertissement (STB) est activée.

17. Procédé selon la revendication 15 ou 16,
**caractérisé en ce que** l'activation de l'unité de réception d'électronique de divertissement (STB), le traitement des signaux d'entrée et/ou la délivrance du signal de sortie produit sont réalisés en fonction des données de commande d'entrée (ES) reçues.

18. Procédé selon l'une des revendications 15 à 17,
**caractérisé en ce que**, lors de l'activation (SE3) de l'unité de réception d'électronique de divertissement (STB), une sélection du signal d'entrée est réalisée, par laquelle une source de signal souhaitée est sélectionnée parmi une pluralité de sources de signal (P1, P2, P3, STBE).
